(19) Europäisches Patentamt
European Patent Office
Office européen des brevets

(11) EP 4 297 236 A1

(12) EUROPEAN PATENT APPLICATION

(43) Date of publication:
27.12.2023 Bulletin 2023/52

(21) Application number: 23161317.5

(22) Date of filing: 10.03.2023

(51) International Patent Classification (IPC):
H02J 7/00 $^{(2006.01)}$     H01M 10/42 $^{(2006.01)}$
H01M 10/44 $^{(2006.01)}$     H01M 10/48 $^{(2006.01)}$

(52) Cooperative Patent Classification (CPC):
H02J 7/0016; H01M 10/425; H01M 10/441;
H01M 10/482; H02J 7/0063; H02J 7/007182

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.06.2022 TW 111122932

(71) Applicant: STL Technology Co., Ltd.
Kaohsiung City 806011 (TW)

(72) Inventor: Chang, Cooper
806011 KAOHSIUNG CITY (TW)

(74) Representative: Cabinet Chaillot
16/20, avenue de l'Agent Sarre
B.P. 74
92703 Colombes Cedex (FR)

(54) BATTERY EQUIPMENT DISCHARGE BALANCING METHOD

(57) The invention provides a battery equipment discharge balancing method, wherein a battery module of the battery equipment includes a plurality of battery blocks connected in parallel, and each battery block includes a plurality of battery cells connected in series. During the discharging process (21), the voltage of each battery cell is measured to generate a plurality of battery cell voltages (23). When any one of battery cell voltages reaches a cut-off discharge voltage (25), it is determined that the battery module is fully discharged. Thereafter, a minimum battery cell voltage in each battery block is obtained respectively to generate a plurality of cut-off battery cell voltages (27). The discharge ratio of each battery block in the next discharge process is adjusted (29) according to the cut-off battery cell voltages respectively, so as to increase the discharge capacity and service life of the battery module.

FIG.2

EP 4 297 236 A1

## Description

### TECHNICAL FIELD

This disclosure relates to a battery equipment discharge balancing method, which is beneficial to increase the discharge capacity and service life of the battery module.

### BACKGROUND

Examples of secondary cells include nickel-metal hydride (NiMH) batteries, nickel-cadmium (NiCd) batteries, lithium ion (Li-ion) batteries, and lithium-ion polymer (Li-Poly) batteries, wherein lithium ion batteries have advantages like high energy density, high operation voltage, wide utility temperature range, no memory effect, long battery life, capable of being charged/discharged numerous times and so on. Lithium ion batteries are widely used in portable electronics such as cellular phones, laptop computers, and digital cameras, and even expanded its usage to the automobile industry in recent years.

The structure of the battery cell includes a positive electrode material, an electrolyte, a negative electrode material, a separator film, and a shell. The separator film is for separating the positive electrode material and negative electrode material to avoid that the battery cell happens a short circuit. The electrolyte is configured in pores of the separator film, and used for conducting an ionic charge. The shell is used to cover the positive electrode material, the separator film, the electrolyte, and the negative electrode material. The shell is usually made of metal material.

A conductive cell frame is often used for connecting a plurality of battery cells in series and/or in parallel to form a battery pack that is capable of outputting a voltage required by a product.

During the charging and discharging process of the battery module, the temperature of the plurality of battery cells of the battery module may be different, and cause the aging of each battery cell to be different. For example, the battery cell with a high temperature will age faster than the battery cell with a low temperature. When one of the battery cells of the battery module is fully discharged, the entire battery module will be judged as cut-off discharge. In other words, when the difference in the aging of each battery cell in the battery module is greater, the discharge capacity and the electrical power provided by the battery module will be lower.

In order to extend the service life of the battery module, the battery cells in the battery module will perform a charge balancing method. For example, when the battery cell is fully charged, the open circuit voltage of each battery will be kept the same by the battery balancing algorithm (BBA) of the battery management system (BMS).

### SUMMARY

The inventor believes that the present balancing management mechanism for the battery module usually focuses on the charging process of the battery module. However, these methods cannot solve the problem of unbalanced aging of each battery block and/or battery cell of the battery module. In order to further improve the service life and performance of the battery module, this disclosure proposes a battery equipment discharge balancing method. A battery module of the battery equipment includes a plurality of battery blocks connected in parallel, and each battery block includes a plurality of battery cells connected in series. During the discharge process of the battery module, the data of each battery cell of each battery block is monitored, and the performance, aging and/or battery capacity of each battery block and/or each battery cell can be calculated. Then, according to the calculated results, the discharge ratio or discharge capacity of each battery block is adjusted, so as to increase the total discharge capacity and service life of the battery module.

An object of this disclosure is to provide a battery equipment discharge balancing method, wherein the battery module includes a plurality of battery blocks connected in parallel. A processor includes an input terminal and an output terminal, the processor is connected to each battery cell of each battery block through the input terminal to detect the working state of each battery cell. In addition, the processor can output a control signal through the output terminal to respectively control the discharge of each battery block, so as to change the discharge ratio of each battery block during the discharge process of the battery module.

Specifically, after the battery module is fully discharged, the aging of each battery block is evaluated according to the relationship between the system parameters and time during the discharge process. Then, according to the aging of each battery block, the discharge ratio or discharge capacity of each battery block in the battery module is adjusted respectively, so as to maximize the discharge capacity of the battery module.

An object of this disclosure is to provide a battery equipment discharge balancing method. When the battery module reaches fully discharged, the minimum battery cell voltage of each battery block is respectively obtained to generate a plurality of cut-off battery cell voltages, wherein each cut-off battery cell voltage respectively corresponds to each battery block. Then a temporary adjustment parameter is calculated according to each cut-off battery cell voltage and a minimum cut-off battery cell voltage thereof, and a next discharge ratio of each battery block can be adjusted according to the temporary adjustment parameter to balance the aging of each battery block and prolong the service life of the battery module.

To achieve the aforementioned object, the disclosure provides a battery equipment discharge balancing method, the battery equipment includes a battery module, wherein the battery module includes a plurality of battery blocks connected in parallel, and each of the battery blocks includes a plurality of battery cells connected in series. The battery equipment discharge balancing method comprises: performing a discharge process of the battery module; measuring a voltage of each of the battery cells in each of the battery blocks to generate a plurality of battery cell voltages; determining at least one of the plurality of battery cell voltages reaching a cut-off discharge voltage; obtaining a minimum battery cell voltage in each of the battery blocks respectively to generate a plurality of cut-off battery cell voltages; and adjusting a next discharge ratio of each of the battery blocks during a next discharge process of the battery module according to the plurality of cut-off battery cell voltages.

## BRIEF DESCRIPTION OF THE DRAWINGS

The structure as well as preferred modes of use, further objects, and advantages of this present disclosure will be best understood by referring to the following detailed description of some illustrative embodiments in conjunction with the accompanying drawings, in which:

FIG. 1 is a schematic diagram of a battery equipment according to an embodiment of this disclosure.

FIG. 2 is a flow chart of a battery equipment discharge balancing method according to an embodiment of this disclosure.

FIG. 3 is a line chart of the discharge time without using this disclosure and using the discharge balancing method of this disclosure.

## DETAILED DESCRIPTION OF THE PREFERRED EMBODIMENTS

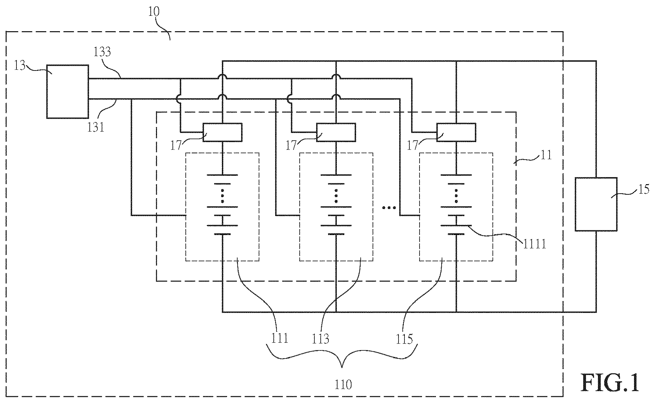

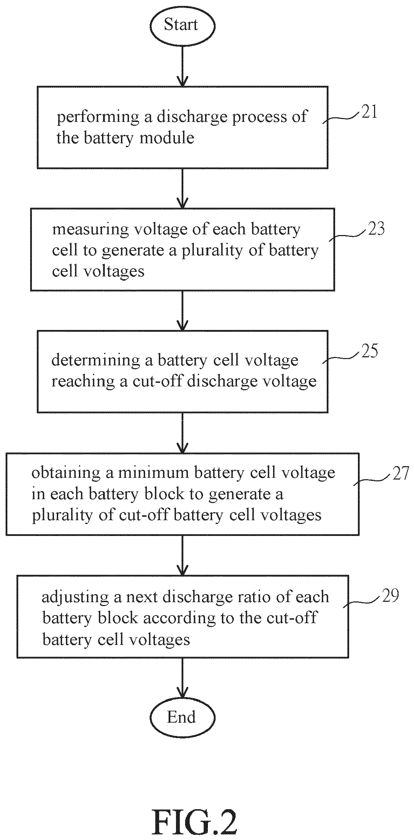

FIG. 1 is a schematic diagram of a battery equipment according to an embodiment of this disclosure. FIG.2 is a flow chart of a battery equipment discharge balancing method according to an embodiment of this disclosure. As shown in FIG. 1, the battery equipment 10 includes a battery module 11 and a processor 13. For example, the processor 13 may be a battery management system (Battery Management System, BMS), and the battery module 11 is connected to and is configure to supply electrical power to the electrical load 15.

The battery module 11 may include a plurality of battery blocks 110, wherein each battery block 110 is connected in parallel. Each battery block 110 includes a battery cell 1111 or a series connection of a plurality of battery cells 1111, wherein each battery block 110 has the same number of battery cells 1111 connected in series, so that each battery block 110 has a similar voltage. The battery cell 1111 of this disclosure is a secondary battery, which can be charged and discharged multiple times. For example, the battery cell 1111 is a lithium ion battery.

In one embodiment of this disclosure, the processor 13 may include an input terminal 131 and an output terminal 133, wherein the input terminal 131 of the processor 13 is electrically connected to each battery cell 1111 of the battery block 110 for detecting the working status of each battery cell 1111, such as voltage, current and temperature of each battery cell 1111. The output terminal 133 of the processor 13 is respectively connected to each battery block 110 through a control circuit 17, and transmits control signals to each control circuit 17 through the output terminal 133. For example, the control circuit 17 may include a plurality of switches and a control unit (MCU).

For the convenience of illustration, the embodiment of this disclosure includes three parallel battery blocks 110 and three control circuits 17, such as a first battery block 111, a second battery block 113 and a third battery block 115 connected in parallel. In other embodiment, the number of battery blocks 110 may be two or more than three, and each battery block 110 is connected to a control circuit 17 respectively. When the battery equipment 10 is operating at discharging process, the processor 13 can respectively control the discharge ratio of each battery block 110 via each control circuit 17.

The processor 13 is electrically connected to each battery block 110 and each battery cell 1111, and controls each battery block 110 and/or each battery cell 1111 to charge or discharge. In actual application, a person having ordinary skill in the art can design the processor 13 and the control circuit 17 according to the discharge balancing method of this disclosure, so it is unnecessary to describe the detailed circuit of the processor 13 and the control circuit 17, and the circuit of the processor 13 and the control circuit 17 is not a limitation of this disclosure.

The battery module 11 can be connected to at least one electrical load 15, such as a server, an engine, a computer, a light source, a stereo, etc., and the processor 13 is used to control the battery module 11 to discharge and supply electrical power to the electrical load 15, as shown in step 21.

During the discharge process of the battery module 11, the processor 13 will continuously detect the voltage of each battery cell 1111 in each battery block 110 to generate a plurality of battery cell voltages, as shown in step 23. For example, the processor 13 can detect the voltage of each battery cell 1111 through the input terminal 131. In practical applications, the processor 13 may be used to monitor the current and temperature of each battery cell 1111.

In general, when the voltage of at least one battery cell 1111 of the battery module 11 reaches, such as less than or equal to, a cut-off discharge voltage, the battery module 11 can be defined as fully discharged, as shown in step 25. Specifically, the cut-off discharge voltage is an artificially defined voltage, which will vary depending on the type of battery and discharge conditions. For example, the minimum discharge voltage of lithium iron phosphate battery is usually not lower than 2.0V, and the minimum discharge voltage of ternary polymer lithium battery is usually not lower than 2.5V.

The definition of the cut-off discharge voltage is mainly to protect the battery module 11 and the battery cell 1111, beyond which further discharge could cause harm. In other words, when the battery cell voltage is less than or equal to the cut-off discharge voltage, it does not mean that the battery module 11 cannot continue to discharge. After the battery module 11 is fully discharged, it needs to be charged to be used.

In an ideal state, during the discharge process of the battery module 11, each parallel-connected battery block 110 will theoretically provide the same amount of electrical power to the electrical load 15. When the battery module 11 is fully discharged, the voltages of the parallel connected battery blocks 110 should also be the same.

Actually, the manufacturing process of each battery cell 1111 in the battery block 110 may be different, so that the battery capacity, rated voltage and/or open circuit voltage of each battery cell 1111 will be difference.

In addition, even if it is assumed that the specifications, such as the battery capacity, rated voltage and/or open circuit voltage, of each battery cell 1111 are exactly the same, after a period of use, such as several times of charging or discharging, the aging of each battery cell 1111 will be different. Thus, the battery capacity, rated voltage, open circuit voltage of each battery cell 1111 will be different, and the battery capacity or voltage of the battery block 110 will also be different.

Specifically, during the charging or discharging process of the battery module 11, the temperature of each battery block 110 and/or battery cell 1111 will be different, resulting in different aging of each battery block 110 and/or battery cell 1111. For example, the aging of the battery block 110 and/or the battery cell 1111 exposed to a higher operating temperature for a long time is faster.

Because aging of each battery block 110 may be different, the charge balancing management of each battery block 110 and/or each battery cell 1111 can be performed by the processor 13. The processor 13 makes each battery block 110 and/or each battery cell 1111 in the battery module 11 is fully charged, when the battery module 11 complete charging, such as fully charging. Thus, each battery block 110 and/or battery cell 1111 have the same open circuit voltage.

In one embodiment of this disclosure, it can be assumed that the temperature of the first battery block 111 is lower than that of the second battery block 113, and the temperature of the second battery block 113 is lower than that of the third battery block 115. Thus, the third battery block 115 with the highest temperature will age faster than the second battery block 113 and the first battery block 111, causing the capacity of the third battery block 115 to be smaller than that of the second battery block 113 and the first battery block 111. For example, after several times of charging and discharging, the capacity of the first battery block 111 may be 1063mAh, the capacity of the second battery block 113 may be 1039mAh, and the capacity of the third battery block 115 may be 851mAh.

Without using the discharge balancing method describe in this disclosure, the discharge ratio of the first battery block 111, the second battery block 113 and the third battery block 115 will be the same during discharge process of the battery module 11. When the third battery block 115 is fully discharged, for example, the battery cell voltage of one of the battery cells 1111 in the third battery block 115 is lower than the cut-off discharge voltage, the entire battery module 11 will be judged as fully discharged, and unable to supply electrical power to the electrical load 15.

At this time, the first battery block 111 and the second battery block 113 still have residual power that has not been used, such as the first battery block 111 and the second battery block 113 may respectively have residual power of 212mAh and 188mAh, which will reduce the total power that the battery module 11 can provide.

This disclosure provides a discharge balancing method, and the processor 13 and the control circuit 17 will perform a discharge balancing management on each battery block 110 and/or each battery cell 1111 according to the working status or aging of each battery block 110 and/or each battery cell 1111. The processor 13 will transmit a control signal to each control circuit 17 through the output terminal 133 according to the performance of each battery block 110 in the battery module 11, and then each control circuit 17 will adjust the discharge ratio of each battery block 110 according to the received control signal. Thus, the battery module 11 can provide more electrical power, and it is beneficial to prolong the service life of the battery module 11.

In one embodiment of this disclosure, it is assumed that the capacity of the first battery block 111 is greater than that of the second battery block 113, and the capacity of the second battery block 113 is greater than that of the third battery block 115. During the discharge process of the battery module 11, the processor 13 can be used to control each battery block 110, so that the discharge ratio or discharge capacity of the first battery block 111 is greater than that of the second battery block 113, and the discharge ratio or discharge capacity of the second battery block 113 is greater than that of the third battery block 115. Thus, the first battery block 111, the second battery block 113, and the third battery block 115 will be fully discharged at the same time or at a similar time.

When the battery module 11 is fully discharged, for example, the battery cell voltage of at least one of the battery cells 1111 in the battery module 11 is lower than the cut-off discharge voltage, the minimum battery cell voltage in each battery block 110 will be obtained respectively to generates a plurality of cut-off battery cell voltages $V_j(k)$, wherein each cut-off battery cell voltage $V_j(k)$ corresponds to each battery block 110, as shown in step 27. Where j of $V_j(k)$ is the number of the battery block, and k of $V_j(k)$ is the times of discharges.

In actual application, the processor 13 will continuously monitor the working status of each battery cell 1111 of each battery block 110, and know the battery cell voltage of each battery cell 1111. For example, the processor 13 will detect the voltage, current and temperature of each battery cell 1111 via the input terminal 131. The processor 13 can further compare whether the voltage of each battery cell is greater than the cut-off discharge voltage to determine whether the battery module 11 is fully discharged.

In one embodiment of this disclosure, when the processor 13 judges that the battery cell voltage of one of the battery cells 1111 is lower than the cut-off discharge voltage, the processor 13 will rank the battery cell voltages of each battery block 110 to know the minimum battery cell voltage in each battery block 110, and generate a plurality of cut-off battery cell voltages $V_j(k)$. Specifically, the number of cut-off battery cell voltages $V_j(k)$ is equal to the number of battery blocks 110.

Thereafter, the processor 13 will adjust the discharge ratio or discharge capacity of each battery block 110 during the next discharge process of the battery module 11 according to each cut-off battery cell voltage $V_j(k)$, as shown in step 29. For example, the processor 13 may rank the cut-off battery cell voltages $V_j(k)$ to obtain a minimum cut-off battery cell voltage $V_{min}(k)$. Then, the processor 13 calculates a next discharge ratio of each battery block 110 during the next discharge process according to each cut-off battery cell voltage $V_j(k)$ and the minimum cut-off battery cell voltage $V_{min}(k)$.

In actual application, the processor 13 can detect the voltage, current and temperature of each battery cell 1111 of each battery block 110 through the input terminal 131, and know the change of voltage, current and temperature with time. Then, the processor 13 can control the discharge ratio of each battery block 110 through the control circuit 17. Specifically, the processor 13 can calculate the next discharge ratio of each battery block 110 according to the current discharge ratio, the cut-off battery cell voltage $V_j(k)$ and the minimum cut-off battery cell voltage $V_{min}(k)$ of each battery block 110.

In one embodiment of this disclosure, it is assumed that after the battery module 11 is fully discharged, the cut-off battery cell voltage $V_1(k)$ of the first battery block 111 is greater than the cut-off battery cell voltage $V_2(k)$ of the second battery block 113, and the cut-off battery cell voltage $V_2(k)$ of the second battery block 113 is greater than the cut-off battery cell voltage $V_3(k)$ of the third battery block 115.

When the battery module 11 is fully discharged, the battery module 11 will be charged. For example, the battery module 11 may be fully charged. When the charging process of the battery module 11 is completed and the next discharge is performed, the processor 13 will control the discharge ratio of each battery block 110. For example, the discharge ratio or discharge capacity of the first battery block 111 is greater than that of the second battery block 113, and the discharge ratio or discharge capacity of the second battery block 113 is greater than that of the third battery block 115.

In one embodiment of this disclosure, j is used to number the battery block 110, K is used to number the kth discharge, and $P_j(k)$ is the kth discharge ratio of the jth battery block 110, wherein the sum of the discharge ratios of all the battery blocks 110 is 1 or 100%. During the kth discharge process, the processor 13 transmits the control signal to each control circuit 17 through the output terminal 133 to control the discharge ratio of each battery block 110 according to the discharge ratio of $P_j(k)$.

When the battery module 11 is kth fully discharged, the cut-off battery cell voltage of the jth battery block 110 detected by the processor 13 is $V_j(k)$, and the minimum cut-off battery cell voltage among all cut-off battery cell voltages $V_j(k)$ is $V_{min}(k)$.

The processor 13 obtains a current temporary adjustment parameter $A_j(k)$ of each battery block 110 according to each cut-off battery cell voltage $V_j(k)$, the minimum cut-off battery cell voltage $V_{min}(k)$ and the current discharge ratio $P_j(k)$. The temporary adjustment parameter of each battery block 110 can obtain according to expression (a).

$$A_j(k) = P_j(k) + G * [V_j(k) - V_{min}(K)] \ldots \text{ expression (a)},$$

wherein the correction value G is a fixed ratio.

Then, according to the current temporary adjustment parameter $A_j(k)$ of each battery block 110, the next discharge ratio $P_j(k+1)$ of each battery block 110 can be calculated. In one embodiment of this disclosure, in the next (k+1)th discharge process, the discharge ratio of the jth battery block 110 will be normalized according to the current temporary adjustment parameter Aj(k), such as expression (b), so as to obtain the next discharge ratio of each battery block 110.

$$Pj(k+1)=Aj(k)/\Sigma Aj(k) \ldots \text{expression (b)}$$

For example, the kth discharge ratio P1(k) of the first battery block 111 in the kth discharge is 0.34, the kth discharge ratio P2(k) of the second battery block 113 in the kth discharge is 0.335, and the kth discharge ratio P3(k) of the third block 115 in the kth discharge is 0.325. After the battery module 11 is fully discharged for the kth time, the cut-off battery cell voltage V1(k) of the first battery block 111 is 3.27V, and the cut-off battery cell voltage V2(k) of the second battery block 113 is 3.09V, and the cut-off battery cell voltage V3(k) of the third battery block 115 is 2.5V. Then the minimum cut-off battery cell voltage Vmin(k) in the kth discharge is 2.5V. Assuming that the correction value G is 6%, then The temporary adjustment parameter A1(k) will be 0.386, such as:

$$Aj(k)=Pj(k)+G\times[Vj(k)-Vmin(K)]=0.34+6\%\times(3.27-2.5)=0.386.$$

Carrying out the same calculation with expression (a), A2(k)=0.371 and A3(k)=0.325 can be obtained. Then perform normalization of calculation according to the expression (b), the next discharge ratio of the first battery block 111 can be obtained, such as (k+1)th discharge ratio P1(k+1)=0.356, the next discharge ratio of the second battery block 113 can be obtained, such as (k+1)th discharge ratio P2(k+1)=0.343, and the next discharge ratio of the third battery block 115 can be obtained, such as (k+1)th discharge ratio P3(k+1)=0.301.

Thus, during the (k+1)th discharge process of the battery module 11, the processor 13 can respectively control the discharge ratios of the first battery block 111, the second battery block 113 and the third battery block 115 according to calculated the discharge ratios P1(k+1), P2(k+1) and P3(k+1).

The above mentioned expression (a), expression (b), the value of the cut-off battery cell voltage, the value of the minimum cut-off battery cell voltage, the value of the discharge ratio, and the value of the constant are only an embodiment of this disclosure, and are not a limitation of this disclosure. In actual application, the expression (a) and/or the expression (b) may be modified to achieve a better discharge balancing of the battery module 11.

In actual application, after each discharge process of the battery module 11, the discharge ratio of each battery block 110 is calculated to perform discharge balancing management for each battery block 110, so as to balance aging of each battery block 110, prolong the service life of the battery module 11, and increase the electrical power provided by the battery module 11.

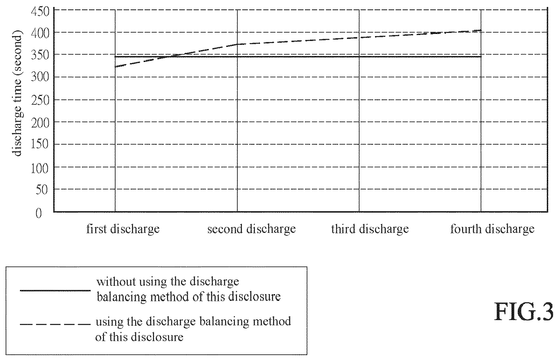

As shown in FIG. 3, a discharge experiment was performed on three battery cells with different aging. The control group (without using the discharge balancing method of this disclosure) is a battery pack in which these three battery cells are connected in series to simulate a general system. The experimental group (using the discharge balancing method of this disclosure) performs the discharge balancing method of this disclosure, the three batteries are divided into three parallel battery modules, and each battery simulates a battery block. The discharge method is a constant power of 90W. The cut-off discharge voltage is set at 2.5V. As a result of the experiment, the discharge time of the control group (solid line) was 340 seconds, while the discharge time of the present invention (dashed line) was 323 seconds from the beginning. After four cycles (the fourth discharge), the discharge time of the present invention (dashed line) was pushed to 399 seconds. This means that this disclosure can balance the discharge capacity of each battery block according to the aging, so as to provide more overall capacity.

## Claims

1. A battery equipment discharge balancing method, the battery equipment (10) includes a battery module (11), wherein the battery module (11) includes a plurality of battery blocks (110) connected in parallel, and each of the battery blocks (110) includes a plurality of battery cells (1111) connected in series, **characterized by** comprising:

   performing a discharge process of the battery module (11);
   measuring a voltage of each of the battery cells (1111) in each of the battery blocks (110) to generate a plurality of battery cell voltages;
   determining at least one of the plurality of battery cell voltages reaching a cut-off discharge voltage;
   obtaining a minimum battery cell voltage in each of the battery blocks (110) respectively to generate a plurality of cut-off battery cell voltages (Vj(k)); and
adjusting a next discharge ratio of each of the battery blocks (110) during a next discharge process of the battery module (11) according to the plurality of cut-off battery cell voltages (Vj(k)).

2. The battery equipment discharge balancing method according to claim 1, **characterized by** wherein the plurality of battery blocks (110) respectively have the same number of the battery cells (1111), and the number of the plurality of battery blocks (110) and the plurality of cut-off battery cell voltages (Vj(k)) are the same.

3. The battery equipment discharge balancing method according to any of claims 1 to 2, **characterized by** wherein at least one of the plurality of battery cell voltages reaches the cut-off discharge voltage, and the battery module (11) is defined as fully discharged.

4. The battery equipment discharge balancing method according to any of claims 1 to 3, **characterized by** further comprising: ranking the plurality of battery cell voltages of each of the battery blocks (110) to obtain the cut-off battery cell voltage of each of the battery blocks (110).

5. The battery equipment discharge balancing method according to any of claims 1 to 4, **characterized by** further comprising: calculating the next discharge ratio of each of the battery blocks (110) according to a current discharge ratio and the cut-off battery cell voltage of each of battery blocks (110).

6. The battery equipment discharge balancing method according to any of claims 1 to 5, **characterized by** further comprising:

   ranking the plurality of cut-off battery cell voltages (Vj(k)) to generating a minimum cut-off battery cell voltage;
   calculating a temporary adjustment parameter of each of the battery blocks (110) according to the plurality of the cut-off battery cell voltages (Vj(k)) and the minimum cut-off battery cell voltage; and
   calculating the next discharge ratio of each of the battery blocks (110) according to the temporary adjustment parameter of each of the battery blocks (110).

7. The battery equipment discharge balancing method according to claim 6, **characterized by** further comprising: calculating the temporary adjustment parameter of each of the battery blocks (110) according to a current discharge ratio, each of the cut-off battery cell voltages (Vj(k)) and the minimum cut-off battery cell voltage of each of the battery blocks (110).

8. The battery equipment discharge balancing method according to any of claims 6 to 7, **characterized by** further comprising: normalizing the temporary adjustment parameter of each of the battery blocks (110) to obtain the next discharge ratio of each of the battery blocks (110).

9. The battery equipment discharge balancing method according to any of claims 1 to 8, **characterized by** further comprising:

   detecting the voltage of each of the battery cells (1111) by a processor (13) to generate the plurality of battery cell voltages; and
   comparing whether the plurality of battery cell voltages being greater than the cut-off discharge voltage by the processor (13).

10. The battery equipment discharge balancing method according to claim 9, **characterized by** further comprising:

    determining at least one of the plurality of battery cell voltages reaching the cut-off discharge voltage by the processor (13);
    ranking the plurality of cut-off battery cell voltages (Vj(k)) by the processor (13) to generate a minimum cut-off battery cell voltage;
    calculating the next discharge ratio of each of the battery blocks (110) in the next discharge process according to each of the cut-off battery cell voltages (Vj(k)) and the minimum cut-off battery cell voltage by the processor (13); and
    controlling each of the battery blocks (110) to preforming the next discharge process respectively through a control circuit by the processor (13) according to the next discharge ratio of each of the battery blocks (110).

FIG.1

Start

performing a discharge process of
the battery module                  21

measuring voltage of each battery
cell to generate a plurality of battery    23
cell voltages

determining a battery cell voltage
reaching a cut-off discharge voltage    25

obtaining a minimum battery cell voltage
in each battery block to generate a        27
plurality of cut-off battery cell voltages

adjusting a next discharge ratio of each
battery block according to the cut-off      29
battery cell voltages

End

# FIG.2

first discharge    second discharge    third discharge    fourth discharge

——————— without using the discharge balancing method of this disclosure

— — — — — using the discharge balancing method of this disclosure

FIG.3

Europäisches
Patentamt

European
Patent Office

Office européen
des brevets

# EUROPEAN SEARCH REPORT

Application Number

EP 23 16 1317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CN 115 037 007 A (STL TECH CO LTD) 9 September 2022 (2022-09-09) * the whole document * | 1-10 | INV. H02J7/00 H01M10/42 H01M10/44 H01M10/48 |
| A | GB 2 600 129 A (STORTERA LTD [GB]) 27 April 2022 (2022-04-27) * paragraphs [0063] - [0130]; figure 21 * | 1-10 | |
| A | EP 2 562 555 A1 (HITACHI LTD [JP]) 27 February 2013 (2013-02-27) * abstract; figure 6 * * paragraphs [0005], [0036]; claims 1,2,13,14 * | 1-10 | |
| A | EP 3 982 507 A1 (LG ENERGY SOLUTION LTD [KR]) 13 April 2022 (2022-04-13) * paragraphs [0014] - [0048], [0037] - [0124]; figure 1 * | 1-10 | |
| A | CN 113 708 449 A (MIANYANG TIANYI SPACE TECH CO LTD) 26 November 2021 (2021-11-26) * abstract; claims 1-10; figure 1 * | 1-10 | TECHNICAL FIELDS SEARCHED (IPC) H02J H01M |

The present search report has been drawn up for all claims

| Place of search | Date of completion of the search | Examiner |
|---|---|---|
| Munich | 9 November 2023 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 23 16 1317

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| CN 115037007 | A | 09-09-2022 | NONE | | |
| GB 2600129 | A | 27-04-2022 | NONE | | |
| EP 2562555 | A1 | 27-02-2013 | CN | 102893170 A | 23-01-2013 |
| | | | EP | 2562555 A1 | 27-02-2013 |
| | | | JP | 5564561 B2 | 30-07-2014 |
| | | | JP | WO2011132311 A1 | 18-07-2013 |
| | | | KR | 20130004336 A | 09-01-2013 |
| | | | US | 2013088201 A1 | 11-04-2013 |
| | | | WO | 2011132311 A1 | 27-10-2011 |
| EP 3982507 | A1 | 13-04-2022 | CN | 113875113 A | 31-12-2021 |
| | | | EP | 3982507 A1 | 13-04-2022 |
| | | | JP | 7107495 B2 | 27-07-2022 |
| | | | JP | 2022516947 A | 03-03-2022 |
| | | | US | 2022140620 A1 | 05-05-2022 |
| | | | WO | 2021080358 A1 | 29-04-2021 |
| CN 113708449 | A | 26-11-2021 | NONE | | |

For more details about this annex : see Official Journal of the European Patent Office, No. 12/82